# EUROPEAN PATENT APPLICATION

(11) **EP 4 807 628 A1**
(43) Date of publication of application: **16.09.2026**
(21) Application number: 24896463.7
(22) Date of filing: 25.11.2024
(51) Int. Cl.: G06N 3/08

(54) **TASK INFORMATION ACQUISITION METHOD AND RELATED DEVICE**

(30) Priority: 27.11.2023 CN 202311604028
(71) Applicant: Huawei Technologies Co., Ltd., Shenzhen, Guangdong 518129 (CN)
(72) Inventor: ZHONG, Wanjun, Shenzhen, Guangdong 518129 (CN); MI, Fei, Shenzhen, Guangdong 518129 (CN); ZENG, Xingshan, Shenzhen, Guangdong 518129 (CN); SHANG, Lifeng, Shenzhen, Guangdong 518129 (CN); JIANG, Xin, Shenzhen, Guangdong 518129 (CN)
(74) Representative: Isarpatent
(86) International application number: PCT/CN2024/134174
(87) International publication number: WO 2025/113374

(57) **Abstract**

This application discloses a task information obtaining method and a related device, to automatically obtain description information of a task. The description information is used as training data for model training, to reduce labor and model training costs. The method in this application includes: When a model that can complete a target task needs to be trained, data associated with the target task and a processing result of the data are first obtained. Next, first description information of the target task may be generated based on the data and the processing result of the data. Then, a plurality of pieces of second description information of the target task may be generated based on the data and the first description information of the target task, where any piece of second description information may carry the data. Finally, third description information of the target task may be selected from the plurality of pieces of second description information of the target task. As a result, the third description information carrying the data may be used as the training data, to complete the model training, thereby obtaining the model that can complete the target task.

## Description

This application claims priority to Chinese Patent Application No. 202311604028.1, filed with the China National Intellectual Property Administration on November 27, 2023, and entitled "TASK INFORMATION OBTAINING METHOD AND RELATED DEVICE", which is incorporated herein by reference in its entirety.

### TECHNICAL FIELD

Embodiments of this application relate to artificial intelligence (artificial intelligence, AI) technologies, and in particular, to a task information obtaining method and a related device.

### BACKGROUND

Instruction tuning (instruction tuning) refers to creating instructions in a natural language form as training data, to train a to-be-trained neural network model, thereby obtaining a trained neural network model. Based on the instruction tuning, the model can better understand content of the instructions and properly respond to the instructions.

In a related technology, to obtain instructions used as training data, a task template usually needs to be prepared. The task template may also be understood as description information of a task. The description information of the task is usually presented as a text used to describe the task, and the text includes a placeholder. After the description information of the task is obtained, corresponding data may be filled in the placeholder included in the description information of the task, to form the instructions. In this case, these instructions may be used to complete model training.

In the foregoing process, because the description information of the task is usually manually written, which is labor-intensive and results in excessively high model training costs.

### SUMMARY

Embodiments of this application provide a task information obtaining method and a related device, to automatically obtain description information of a task. The description information is used as training data for model training, to reduce labor and model training costs.

According to a first aspect, an embodiment of this application provides a task information obtaining method, and the method includes:
when a model that can complete a target task needs to be trained, first obtaining data associated with the target task and a processing result obtained by processing the data based on the target task, where it should be noted that the processing result obtained by processing the data based on the target task may also be understood as the processing result of the data associated with the target task;
after the data associated with the target task and the processing result of the data associated with the target task are obtained, processing the data associated with the target task and the processing result of the data associated with the target task, to obtain the first description information of the target task, where it should be noted that the first description information of the target task usually does not include a placeholder;
after the first description information of the target task is obtained, processing the data associated with the target task and the first description information of the target task, to obtain a plurality of pieces of second description information of the target task, where it should be noted that any one of a plurality of second texts of the target task may include the placeholder for carrying the data associated with the target task; and
after the plurality of pieces of second description information of the target task are obtained, selecting one or more pieces of second description information from the plurality of pieces of second description information as third description information of the target task. In this case, the data associated with the target task may be inserted into the third description information obtained through selection, to obtain the third description information carrying the data associated with the target task. In this way, model training may be completed by using the third description information carrying the data associated with the target task, to obtain the model that can complete the target task.

It can be learned from the foregoing method that the method provides a framework for automatically generating description information of a task. The framework may generate a plurality of pieces of description information (that is, the plurality of pieces of second description information of the target task) of the task based on data associated with the task (that is, the target task) and a processing result of the data, and select optimal description information of the task (that is, the third description information of the target task) from the plurality of pieces of description information of the task as training data, to complete model training. Because a running process of the framework involves minimal manual intervention, labor costs can be reduced, thereby reducing model training costs.

In a possible implementation, the data includes at least one piece of sub-data and at least one data category corresponding to the at least one piece of sub-data, any piece of second description information includes at least one placeholder corresponding to the at least one data category, and the at least one placeholder is used to carry the at least one piece of sub-data. In the foregoing implementation, the data associated with the target task may include the at least one piece of sub-data and the at least one data category corresponding to the at least one piece of sub-data. Because the plurality of pieces of second description information of the target task are obtained based on the data associated with the target task and the first description information of the target task, any piece of second description information may include at least one placeholder corresponding to the at least one data category, and the at least one placeholder may be used to separately carry the at least one piece of sub-data included in the data associated with the target task. It can be learned that the plurality of pieces of second description information of the target task generated in this way may be directly used as candidate templates of the target task, and all these candidate templates each include the placeholder. Therefore, the data associated with the target task may be inserted into an optimal template (that is, the third description information) selected from these candidate templates, to serve as training data for model training.

In a possible implementation, generating the first description information of the target task based on the data and the processing result includes: processing the data and the processing result by using a first neural network model, to obtain the first description information of the target task. In the foregoing implementation, after the data associated with the target task and the processing result of the data associated with the target task are obtained, the data associated with the target task may be used as an input of the target task, and the processing result of the data associated with the target task is used as an output of the target task. Next, a first instruction may be constructed based on the input and the output of the target task. Then, the first neural network model may process the first instruction, to obtain the first description information of the target task. It can be learned that, according to the framework for automatically generating the description information of the task provided in this embodiment of this application, in a running process of the framework, a neural network model may be used to complete an initial template (that is, the first description information) of the target task. In this way, various factors may be comprehensively considered, so that the finally selected optimal template of the target task has specific quality. Therefore, the training data constructed based on the optimal template helps improve model training effect.

In a possible implementation, generating the plurality of pieces of second description information of the target task based on the data and the first description information of the target task includes: processing the data and the first description information of the target task by using a second neural network model, to obtain the plurality of pieces of second description information of the target task. In the foregoing implementation, after the first description information of the target task is obtained, at least one data category included in the data associated with the target task may be used as a keyword of the target task. Next, a second instruction may be constructed based on the first description information of the target task and the keyword of the target task. Then, the second instruction may be input into the second neural network model, to process the second instruction by using the second neural network model, thereby obtaining the plurality of pieces of second description information of the target task. It can be learned that, according to the framework for automatically generating the description information of the task provided in this embodiment of this application, in a running process of the framework, a neural network model may be used to complete a candidate template (that is, the second description information) of the target task. In this way, various factors may be comprehensively considered, so that a finally selected optimal template of the target task has specific quality. Therefore, the training data constructed based on the optimal template helps improve model training effect.

In a possible implementation, there are a plurality of pieces of third description information, and selecting the third description information from the plurality of pieces of second description information includes: clustering the plurality of pieces of second description information to obtain a plurality of information categories, where one of the plurality of information categories includes at least one piece of second description information; and selecting the plurality of pieces of third description information from the plurality of information categories. In the foregoing implementation, after the plurality of pieces of second description information of the target task are obtained, the plurality of pieces of second description information of the target task may be clustered by using a clustering algorithm, to obtain the plurality of information categories. It may be understood that, in the plurality of information categories, any information category may include at least one piece of second description information of the target task. After the plurality of information categories are obtained, optimal second description information in each information category may be determined as the third description information of the target task. As a result, the plurality of pieces of third description information of the target task may be finally obtained. It can be learned that, according to a framework for automatically generating description information of a task provided in this embodiment of this application, an optimal template of the target task may be selected through clustering, so that the selected optimal template is diversified. Therefore, training data constructed based on the optimal template helps further improve model training effect.

In a possible implementation, the plurality of pieces of second description information are presented in a form of a text, and clustering the plurality of pieces of second description information to obtain the plurality of information categories includes: converting the plurality of pieces of second description information presented in the form of a text into a plurality of pieces of second description information presented in a form of a vector; and clustering the plurality of pieces of second description information presented in the form of a vector to obtain the plurality of information categories. In the foregoing implementation, the plurality of pieces of second description information that is of the target task and that is output by the second neural network model are usually presented in the form of a text. Therefore, before clustering, computation may be first performed on the plurality of pieces of second description information presented in the form of a text, to obtain the plurality of pieces of second description information presented in the form of a vector. Then, the plurality of pieces of second description information presented in the form of a vector may be clustered, to obtain the plurality of information categories. It can be learned that converting a candidate template in a form of a text into a candidate template in a form of a vector may improve clustering efficiency for the candidate template.

In a possible implementation, the method further includes: separately processing, by using a third neural network model, the plurality of pieces of second description information carrying the data, to obtain a plurality of probabilities of the processing result; and using the plurality of probabilities as evaluation values of the plurality of pieces of second description information; and selecting the plurality of pieces of third description information from the plurality of categories includes: using, in any one of the plurality of information categories, second description information with a highest evaluation value as the third description information. In the foregoing implementation, after the plurality of pieces of second description information of the target task are obtained, the data associated with the target task may be inserted into the plurality of pieces of second description information, to obtain the plurality of pieces of second description information carrying the data associated with the target task. The plurality of pieces of second description information carrying the data associated with the target task may be separately input into the third neural network model, to predict the plurality of probabilities of the processing result of the data associated with the target task. Because the plurality of probabilities are in a one-to-one correspondence with the plurality of pieces of second description information carrying the data associated with the target task, the plurality of probabilities may be used as evaluation values of the plurality of pieces of second description information of the target task. Then, after the plurality of information categories are obtained, second description information with a highest evaluation value in each information category may be used as the third description information of the target task. As a result, the plurality of pieces of third description information of the target task may be finally obtained. It can be learned that, according to a framework for automatically generating description information of a task provided in this embodiment of this application, an optimal template of the target task may be selected through clustering and evaluation, so that the selected optimal template has accuracy and diversity. Therefore, training data constructed based on the optimal template helps further improve model training effect.

In a possible implementation, an object of model training is a fourth neural network model, and the model that can complete the target task is a fifth neural network model.

According to a second aspect, an embodiment of this application provides a task information obtaining apparatus. The apparatus includes: an obtaining module, configured to obtain data associated with a target task, and a processing result obtained by processing the data based on the target task; a first generation module, configured to generate first description information of the target task based on the data and the processing result; a second generation module, configured to generate a plurality of pieces of second description information of the target task based on the data and the first description information of the target task, where any piece of second description information includes a placeholder for carrying the data; and a selection module, configured to select third description information from the plurality of pieces of second description information, where the third description information carrying the data is used for model training, to obtain a model that can complete the target task.

In a possible implementation, the data includes at least one piece of sub-data and at least one data category corresponding to the at least one piece of sub-data, any piece of second description information includes at least one placeholder corresponding to the at least one data category, and the at least one placeholder is used to carry the at least one piece of sub-data.

In a possible implementation, the first generation module is configured to process the data and the processing result by using a first neural network model, to obtain the first description information of the target task.

In a possible implementation, the second generation module is configured to process the data and the first description information of the target task by using a second neural network model, to obtain the plurality of pieces of second description information of the target task.

In a possible implementation, the selection module is configured to: cluster the plurality of pieces of second description information to obtain a plurality of information categories, where one of the plurality of information categories includes at least one piece of second description information; and select a plurality of pieces of third description information from the plurality of information categories.

In a possible implementation, the plurality of pieces of second description information are presented in a form of a text. The selection module is configured to: convert the plurality of pieces of second description information presented in the form of a text into a plurality of pieces of second description information presented in a form of a vector; and cluster the plurality of pieces of second description information presented in the form of a vector to obtain the plurality of information categories.

In a possible implementation, the apparatus further includes: a processing module, configured to separately process, by using a third neural network model, the plurality of pieces of second description information carrying the data, to obtain a plurality of probabilities of the processing result; and an evaluation module, configured to use the plurality of probabilities as evaluation values of the plurality of pieces of second description information. The selection module is configured to use, in any one of the plurality of information categories, second description information with a highest evaluation value as the third description information.

In a possible implementation, an object of model training is a fourth neural network model, and the model that can complete the target task is a fifth neural network model.

According to a third aspect, an embodiment of this application provides a task information obtaining apparatus. The apparatus includes a memory and a processor. The memory stores code, and the processor is configured to execute the code. When the code is executed, the task information obtaining apparatus performs the method according to the first aspect or any one of the possible implementations of the first aspect.

According to a fourth aspect, an embodiment of this application provides a circuit system. The circuit system includes a processing circuit, and the processing circuit is configured to perform the method according to the first aspect or any one of the possible implementations of the first aspect.

According to a fifth aspect, an embodiment of this application provides a chip system. The chip system includes a processor, configured to invoke a computer program or computer instructions stored in a memory, so that the processor performs the method according to the first aspect or any one of the possible implementations of the first aspect.

In a possible implementation, the processor is coupled to the memory through an interface.

In a possible implementation, the chip system further includes a memory. The memory stores the computer program or the computer instructions.

According to a sixth aspect, an embodiment of this application provides a computer storage medium. The computer storage medium stores a computer program. When the program is executed by a computer, the computer is enabled to perform the method according to the first aspect or any one of the possible implementations of the first aspect.

According to a seventh aspect, an embodiment of this application provides a computer program product. The computer program product stores instructions. When the instructions are executed by a computer, the computer is enabled to perform the method according to the first aspect or any one of the possible implementations of the first aspect.

In embodiments of this application, when a model that can complete a target task needs to be trained, data associated with the target task and a processing result obtained by processing the data based on the target task may be first obtained. Next, first description information of the target task may be generated based on the data associated with the target task and the processing result of the data. Then, a plurality of pieces of second description information of the target task may be generated based on the data associated with the target task and the first description information of the target task, where any piece of second description information includes a placeholder for carrying the data associated with the target task. Finally, third description information of the target task may be selected from the plurality of pieces of second description information of the target task. As a result, the third description information carrying the data associated with the target task may be used as training data, to complete model training, thereby obtaining the model that can complete the target task. It can be learned from the foregoing process that, embodiments of this application provide a framework for automatically generating description information of a task. The framework may generate a plurality of pieces of description information (that is, the plurality of pieces of second description information of the target task) of the task based on data associated with the task and a processing result of the data, and select optimal description information (that is, the third description information of the target task) of the task from the plurality of pieces of description information of the task as training data, to complete model training. Because a running process of the framework involves minimal manual intervention, labor costs can be reduced, thereby reducing model training costs.

### BRIEF DESCRIPTION OF DRAWINGS

FIG. 1 is a diagram of a structure of an artificial intelligence main framework;
FIG. 2a is a diagram of a structure of a task information obtaining system according to an embodiment of this application;
FIG. 2b is a diagram of another structure of a task information obtaining system according to an embodiment of this application;
FIG. 2c is a diagram of a related device for obtaining task information according to an embodiment of this application;
FIG. 3 is a diagram of an architecture of a system according to an embodiment of this application;
FIG. 4 is a schematic flowchart of a task information obtaining method according to an embodiment of this application;
FIG. 5 is a diagram of obtaining task description information according to an embodiment of this application;
FIG. 6 is another diagram of obtaining task description information according to an embodiment of this application;
FIG. 7 is a diagram of selecting task description information according to an embodiment of this application;
FIG. 8 is a diagram of a structure of a task information obtaining apparatus according to an embodiment of this application;
FIG. 9 is a diagram of a structure of an execution device according to an embodiment of this application;
FIG. 10 is a diagram of a structure of a training device according to an embodiment of this application; and
FIG. 11 is a diagram of a structure of a chip according to an embodiment of this application.

### DESCRIPTION OF EMBODIMENTS

Embodiments of this application provide a task information obtaining method and a related device, to automatically obtain description information of a task, and use the description information as training data for model training, to reduce labor and model training costs.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner for describing objects having a same attribute in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

Instruction tuning refers to creating instructions in a natural language form as training data, to train a to-be-trained neural network model, thereby obtaining a trained neural network model. Based on instruction tuning, the model can better understand content of the instructions and properly respond to the instructions.

In a related technology, to obtain instructions used as training data, a task template usually needs to be prepared. The task template may also be understood as description information of a task. The description information of the task is usually presented as a text used to describe the task, and the text includes a placeholder. After the description information of the task is obtained, corresponding data may be filled in the placeholder included in the description information of the task, to form the instructions. In this case, these instructions may be used to complete model training. For example, description information of a question-answering task is "Please answer a [question] based on an [article]". Because a piece of data includes the article [development history of XX enterprise] and the question [in which year was the XX enterprise founded], the data may be inserted into the description information of the question-answering task to form an instruction "Please answer [in which year was the XX enterprise founded] based on the [development history of XX enterprise]". Therefore, the instruction may be used to train a neural network model that can complete the question-answering task.

In the foregoing process, because the description information of the task is usually manually written, creating the training data is labor-intensive (for example, the description information of the task requires a significant amount of time for writing and necessitates a certain quantity of personnel to partake), which results in excessively high model training costs.

Further, the description information of the task is usually manually written, and a person who writes the description information is usually limited in thinking. Therefore, the written description information of the task lacks diversity (for example, the personnel cannot write a sufficient quantity of description information about a task, that is, a sufficient quantity of templates of the task, and the like), resulting in poor model training effect.

To resolve the foregoing problem, an embodiment of this application provides a task information obtaining method. The method may be implemented with reference to an artificial intelligence (artificial intelligence, AI) technology. The AI technology is a technical discipline that simulates, extends, and expands human intelligence by using a digital computer or a machine controlled by a digital computer. The AI technology obtains an optimal result by perceiving an environment, obtaining knowledge, and using the knowledge. In other words, the artificial intelligence technology is a branch of computer science, and attempts to understand essence of intelligence and produce a new intelligent machine that can react in a manner similar to human intelligence. Using artificial intelligence for data processing is a common application of artificial intelligence.

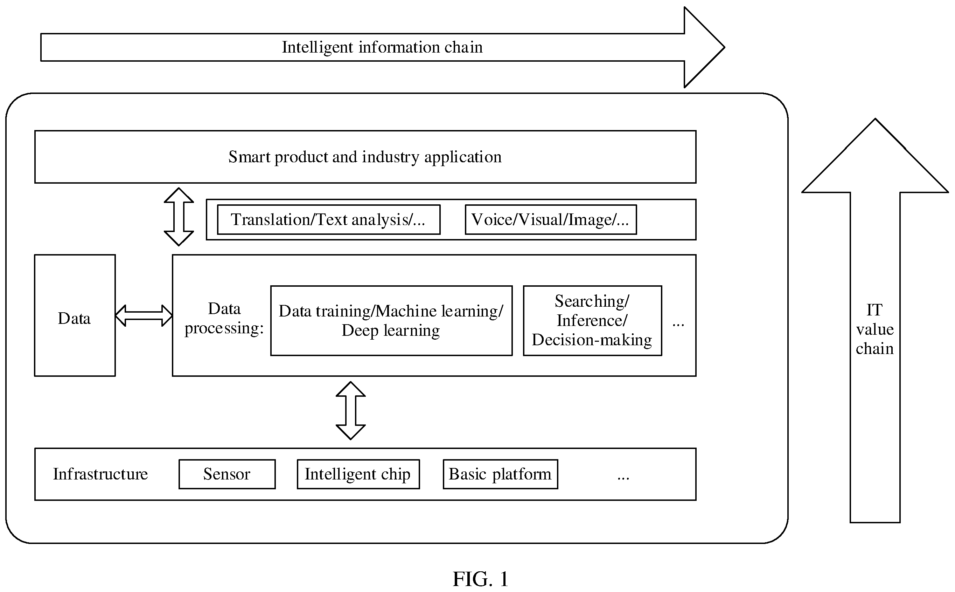

An overall working procedure of an artificial intelligence system is first described. FIG. 1 is a diagram of a structure of an artificial intelligence main framework. The following describes the artificial intelligence main framework from two dimensions: an "intelligent information chain" (horizontal axis) and an "IT value chain" (vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

### (1) Infrastructure

The infrastructure provides computing capability support for the artificial intelligence system, implements communication with the external world, and implements support by using a basic platform. The infrastructure communicates with the outside by using a sensor. A computing capability is provided by an intelligent chip (a hardware acceleration chip such as a CPU, an NPU, a GPU, an ASIC, or an FPGA). The basic platform includes related platforms such as a distributed computing framework and a network for assurance and support, and may include cloud storage and computing, an interconnected network, and the like. For example, the sensor communicates with the outside to obtain data, and the data is provided to an intelligent chip in a distributed computing system provided by the basic platform for computing.

### (2) Data

Data at an upper layer of the infrastructure indicates a data source in the artificial intelligence field. The data relates to a graph, an image, a speech, and a text, further relates to Internet of things data of a conventional device, and includes service data of an existing system and perception data such as force, displacement, a liquid level, a temperature, and humidity.

### (3) Data processing

Data processing usually includes data training, machine learning, deep learning, searching, inference, decision-making, and the like.

Machine learning and deep learning may mean performing symbolic and formal intelligent information modeling, extraction, preprocessing, training, and the like on data.

Inference is a process in which human intelligent inference is simulated in a computer or an intelligent system, and machine thinking and problem resolving are performed by using formal information according to an inference control policy. A typical function is searching and matching.

Decision-making is a process of making a decision after intelligent information is inferred, and usually provides functions such as classification, ranking, and prediction.

### (4) General capability

After data undergoes the foregoing data processing, some general capabilities may be further formed based on a data processing result. For example, the general capabilities may be an algorithm or a general system, for example, translation, text analysis, computer vision processing, speech recognition, and image recognition.

### (5) Smart product and industry application

The smart product and industry application are products and applications of the artificial intelligence system in various fields. The smart product and industry application involve packaging overall artificial intelligence solutions, to productize and apply intelligent information decision-making. Application fields of the intelligent information decision-making mainly include smart terminals, smart transportation, smart health care, autonomous driving, smart cities, and the like.

The following describes a hardware device configured to implement the method provided in embodiments of this application.

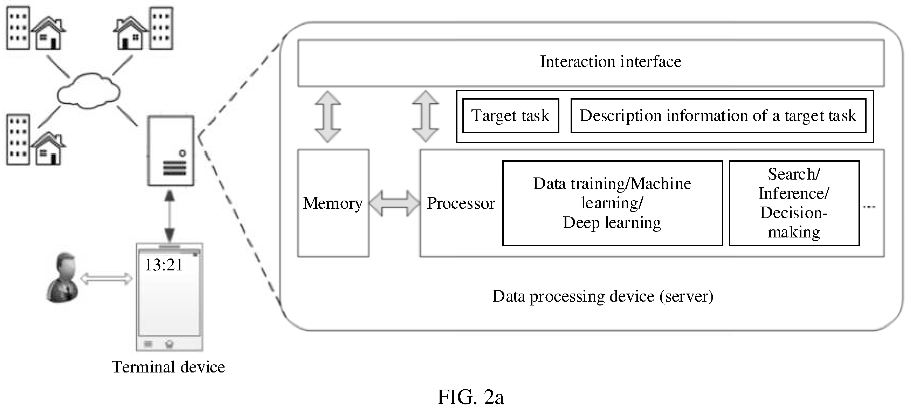

FIG. 2a is a diagram of a structure of a task information obtaining system according to an embodiment of this application. The task information obtaining system includes user equipment and a data processing device. The user equipment includes an intelligent terminal, for example, a mobile phone, a personal computer, or an information processing center. The user equipment is an initiator of task information obtaining, and is used as an initiator of a task information obtaining request. Generally, a user initiates the request by using the user equipment.

The data processing device may be a device or a server with a data processing function, for example, a cloud server, a network server, an application server, or a management server. The data processing device receives the task information obtaining request from the intelligent terminal through an interaction interface, and then performs task information obtaining processing by using a memory that stores data and a processor that processes the data. The memory in the data processing device may be a collective term, and includes a local storage and a database for storing historical data. The database may be deployed on the data processing device or another network server.

In the task information obtaining system shown in FIG. 2a, the user equipment may receive instructions of the user. For example, the user equipment may obtain a task input/selected by the user, and then initiate a request to the data processing device, so that the data processing device executes a task information obtaining application for the task obtained by the user equipment, and description information of the task is obtained. For example, the user equipment may obtain a target task input by the user, and then initiate a request to the data processing device (the request usually includes data associated with the target task, a processing result obtained by processing the data based on the target task, and the like). Then, the data processing device may perform a series of processing (for example, information generation and information selection) on the target task based on the request, to obtain description information of the target task.

In FIG. 2a, the data processing device may perform the task information obtaining method in embodiments of this application.

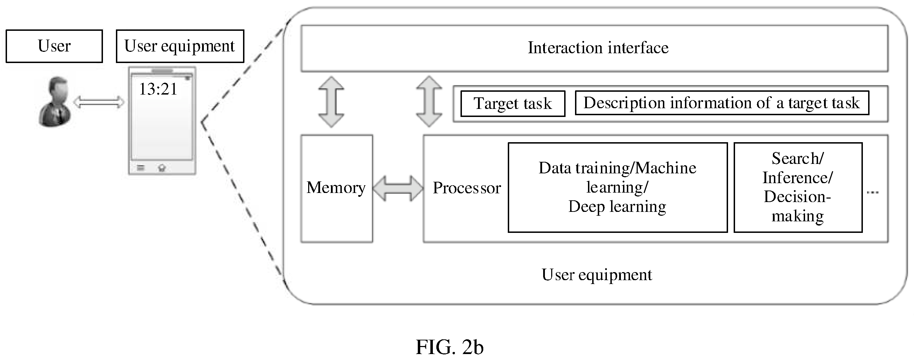

FIG. 2b is a diagram of another structure of a task information obtaining system according to an embodiment of this application. In FIG. 2b, user equipment directly serves as a data processing device. The user equipment can directly obtain an input from a user, and hardware of the user equipment directly performs processing. A specific process is similar to that in FIG. 2a. Refer to the foregoing descriptions. Details are not described herein again.

In the task information obtaining system shown in FIG. 2b, the user equipment may receive instructions of the user. For example, the user equipment may obtain a target task input by the user, and then the user equipment may perform a series of processing (for example, information generation and information selection) on the target task based on data associated with the target task and a processing result obtained by processing the data based on the target task, to obtain description information of the target task.

In FIG. 2b, the user equipment may perform the task information obtaining method in embodiments of this application.

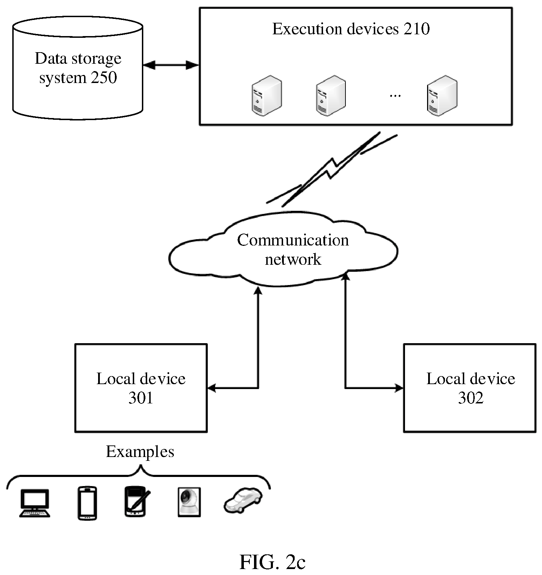

FIG. 2c is a diagram of a related device for obtaining task information according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be disposed on a cloud or another network server.

The processor in FIG. 2a and FIG. 2b may perform data training, machine learning, or deep learning by using a neural network model or another model (for example, a model based on a support vector machine), and execute a task information obtaining application for a task by using a model finally obtained through data training or learning, to obtain a corresponding processing result.

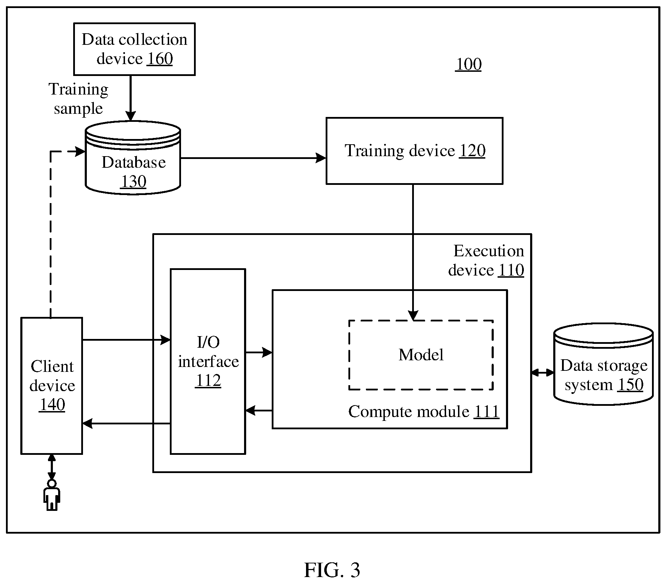

FIG. 3 is a diagram of an architecture of a system 100 according to an embodiment of this application. In FIG. 3, an execution device 110 is configured with an input/output (input/output, I/O) interface 112, configured to exchange data with an external device. A user may input data to the I/O interface 112 by using a client device 140. In this embodiment of this application, the input data may include each to-be-scheduled task, a resource that can be invoked, and another parameter.

In a process in which the execution device 110 preprocesses the input data, or in a process in which a compute module 111 of the execution device 110 performs related processing such as computing (for example, solving a mixed-integer programming equation by using a symbol expression), the execution device 110 may invoke data, code, and the like in the data storage system 150 for corresponding processing, or may store data, instructions, and the like obtained through corresponding processing in the data storage system 150.

Finally, the I/O interface 112 returns a processing result to the client device 140, to provide the processing result to the user.

It should be noted that, for a target (for example, description information of a target task in the task information obtaining method provided in embodiments of this application), a training device 120 generates a corresponding target model (for example, a first neural network model, a second neural network model, and a third neural network model in the task information obtaining method provided in embodiments of this application) or rule based on different training data, and the corresponding target model/rule may be used to implement the foregoing target. The training data may be stored in a database 130, and is from a training sample collected by a data collection device 160.

In a case shown in FIG. 3, the user may manually provide input data and the user may manually provide the input data in an interface provided by the I/O interface 112. In another case, the client device 140 may automatically send the input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner of displaying, a sound, an action, or the like. The client device 140 may alternatively be used as a data collection end, to collect, as new sample data, input data input to the I/O interface 112 and an output result output from the I/O interface 112 that are shown in the figure, and store the new sample data into the database 130. Certainly, the client device 140 may alternatively not perform collection. Instead, the I/O interface 112 directly stores, into the database 130 as new sample data, the input data input to the I/O interface 112 and the output result output from the I/O interface 112 that are shown in the figure.

It should be noted that FIG. 3 is merely a diagram of an architecture of a system according to an embodiment of this application. A location relationship between the devices, the components, the modules, and the like shown in the figure does not constitute any limitation. For example, in FIG. 3, the data storage system 150 is an external memory relative to the execution device 110, but in another case, the data storage system 150 may alternatively be disposed in the execution device 110. As shown in FIG. 3, the target model may be obtained through training based on the training device 120.

An embodiment of this application further provides a chip. The chip includes a neural network processing unit NPU. The chip may be disposed in the execution device 110 shown in FIG. 3, to complete computing work of the compute module 111. The chip may alternatively be disposed in the training device 120 shown in FIG. 3, to complete training work of the training device 120 and output the target model/rule.

The neural network processing unit NPU serves as a coprocessor, and may be mounted to a host central processing unit (central processing unit, CPU) (host CPU), and the host CPU assigns a task. A core part of the NPU is an operation circuit, and a controller controls the operation circuit to extract data in a memory (a weight memory or an input memory) and perform an operation.

In some implementations, the operation circuit includes a plurality of process engines (process engines, PEs) inside. In some implementations, the operation circuit is a two-dimensional systolic array. The operation circuit may alternatively be a one-dimensional systolic array or another electronic circuit capable of performing mathematical operations such as multiplication and addition. In some implementations, the operation circuit is a general-purpose matrix processor.

For example, it is assumed that there is an input matrix A, a weight matrix B, and an output matrix C. The operation circuit fetches, from a weight memory, data corresponding to the matrix B, and caches the data on each PE in the operation circuit. The operation circuit fetches data of the matrix A from an input memory, to perform a matrix operation on the matrix B, and stores an obtained partial result or an obtained final result of the matrix in an accumulator (accumulator).

A vector compute unit may perform further processing such as vector multiplication, vector addition, an exponent operation, a logarithm operation, or value comparison on an output of the operation circuit. For example, the vector compute unit may be configured to perform network computation, such as pooling (pooling), batch normalization (batch normalization), or local response normalization (local response normalization) at a non-convolutional/non-FC layer in a neural network.

In some implementations, the vector compute unit can store a processed output vector in a unified cache. For example, the vector compute unit may apply a nonlinear function to an output, for example, a vector of an accumulated value, of the operation circuit to generate an activation value. In some implementations, the vector compute unit generates a normalized value, a combined value, or both a normalized value and a combined value. In some implementations, the processed output vector can be used as an activated input to the operation circuit, for example, the processed output vector can be used at a subsequent layer of the neural network.

A unified memory is configured to store input data and output data.

For weight data, a direct memory access controller (direct memory access controller, DMAC) directly transfers input data from an external memory to the input memory and/or the unified memory, stores, into the weight memory, weight data in the external memory, and stores, into the external memory, data in the unified memory.

A bus interface unit (bus interface unit, BIU) is configured to implement interaction between the host CPU, the DMAC, and an instruction fetch buffer via a bus.

The instruction fetch buffer (instruction fetch buffer) connected to the controller is configured to store instructions used by the controller.

The controller is configured to invoke the instructions buffered in the instruction fetch buffer, to control a working process of an operation accelerator.

Usually, the unified memory, the input memory, the weight memory, and the instruction fetch buffer each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of the neural network. Therefore, for ease of understanding, the following first describes terms and concepts related to the neural network in embodiments of this application.

### (1) Neural network

The neural network may include a neuron. The neuron may be an operation unit that uses xₛ and an intercept of 1 as an input. An output of the operation unit may be as follows: ${h}_{W , b} \left(x\right) = f \left({W}^{T}x\right) = f \left({\sum }_{s = 1}^{n} {W}_{s} {x}_{s} + b\right)$

s=1, 2, ..., or n, n is a natural number greater than 1, Wₛ is a weight of xₛ, and b is bias of the neuron. f is an activation function (activation function) of the neuron, and is used to introduce a nonlinear feature into the neural network, to convert an input signal in the neuron into an output signal. The output signal of the activation function may serve as an input of a next convolution layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

Work at each layer of the neural network may be described by using a mathematical expression *y = a*(*Wx+b*)*.* From a physical layer, work at each layer of the neural network may be understood as completing transformation from input space to output space (that is, from row space to column space of a matrix) by performing five operations on the input space (a set of input vectors). The five operations include: 1. dimension increase/dimension reduction; 2. scaling up/scaling down; 3. rotation; 4. translation; and 5. "bending". The operations 1, 2, and 3 are completed by *Wx*, the operation 4 is completed by *+b*, and the operation 5 is completed by *a*(). The word "space" is used herein for expression because a classified object is not a single thing, but a type of thing. Space is a set of all individuals of this type of thing. *W* is a weight vector, and each value in the vector represents a weight value of one neuron at this layer of the neural network. The vector *W* determines space transformation from the input space to the output space described above. In other words, a weight *W* at each layer controls how to transform space. A purpose of training the neural network is to finally obtain a weight matrix (a weight matrix formed by vectors *W* at a plurality of layers) at all layers of a trained neural network. Therefore, a process of training the neural network is essentially a manner of learning control of spatial transformation, and more specifically, learning a weight matrix.

Because it is expected that an output of the neural network is as close as possible to a value that is actually expected to be predicted, a current predicted value of the network may be compared with a target value that is actually expected, and then a weight vector at each layer of the neural network is updated based on a difference between the current predicted value and the target value (there is usually an initialization process before the first update, that is, a parameter is preconfigured for each layer of the neural network). For example, if the predicted value of the network is large, the weight vector is adjusted to lower the predicted value until the neural network can predict the target value that is actually expected. Therefore, "how to obtain a difference between the predicted value and the target value through comparison" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss.

### (2) Back propagation algorithm

In a training process, a neural network may correct values of parameters in an initial neural network model by using an error back propagation (back propagation, BP) algorithm, so that a reconstruction error loss of the neural network model becomes increasingly smaller. Specifically, an input signal is forward transferred until the error loss is generated in an output, and the parameter of the initial neural network model is updated through back propagation of information about the error loss, to converge the error loss. The back propagation algorithm is an error-loss-centered back propagation motion intended to obtain a parameter, such as a weight matrix, of an optimal neural network model.

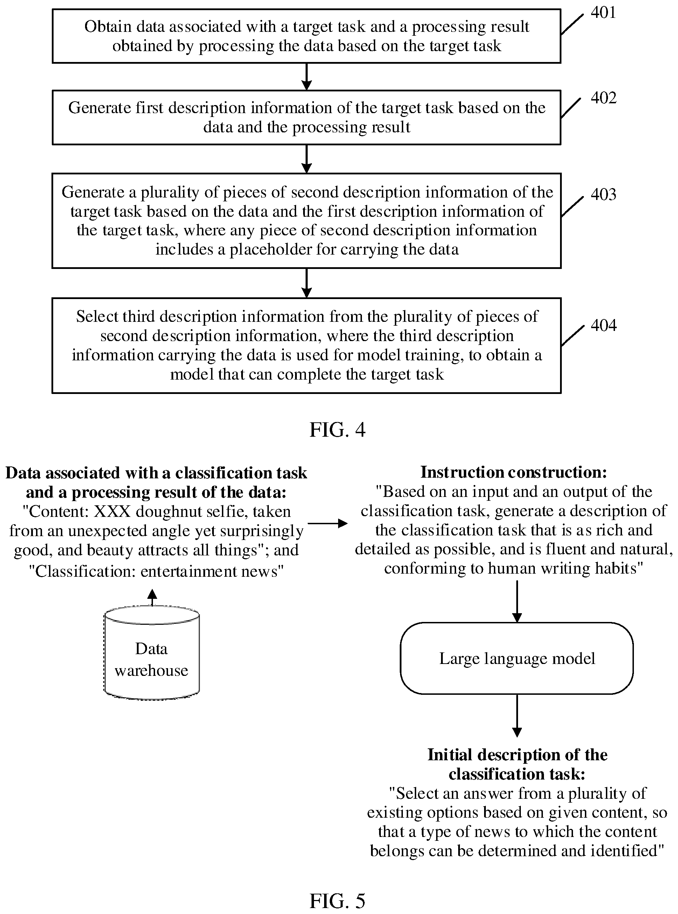

It should be noted that the task information obtaining method provided in this embodiment of this application is mainly used to obtain description information of a task. A process of obtaining the description information of the task may relate to application of a neural network model (for example, obtaining the description information of the task by using one or more trained neural network models). After the description information of the task is obtained, the description information of the task may be used for subsequent neural network model training (for example, the description information of the task may be used as training data for a to-be-trained neural network model). To further understand the process, the following further describes the process with reference to FIG. 4. FIG. 4 is a schematic flowchart of a task information obtaining method according to an embodiment of this application. As shown in FIG. 4, the method includes the following steps.

401: Obtain data associated with a target task and a processing result obtained by processing the data based on the target task.

In this embodiment, when a model that can complete the target task needs to be trained, the data associated with the target task and the processing result (hereinafter referred to as the processing result of the data associated with the target task) that is obtained by processing the data based on the target task may be obtained from a data warehouse. It should be noted that the target task, the data associated with the target task, and the processing result of the data associated with the target task are all stored in the data warehouse.

Specifically, the data warehouse may be constructed in the following manner:
(1) It is assumed that there are a plurality of tasks. For any one of the plurality of tasks, data associated with the task and a processing result of the data associated with the task may be collected in advance. Further, the data associated with the task may include at least one piece of sub-data and at least one data category that is in a one-to-one correspondence with the at least one piece of sub-data.

It should be noted that an operation similar to that performed on the task may also be performed on remaining tasks in the plurality of tasks. As a result, data associated with the plurality of tasks and a processing result of the data associated with the plurality of tasks may be finally obtained through collection.

For example, it is assumed that there are N tasks *T*₁,*T*₂,...,*T_{N}* (N is an integer greater than or equal to 2). For a task *Tₜ* (t=1, ..., N), M pieces of data ${x}_{t}^{1} , {x}_{t}^{2} , … , {x}_{t}^{M}$ (M is an integer greater than or equal to 1) associated with *Tₜ* may be collected, and a processing result ${y}_{t}^{1} , {y}_{t}^{2} , … , {y}_{t}^{M}$ of the M pieces of data may also be collected. For an i^{th} piece of data ${x}_{t}^{i}$ (i=1, ..., M) associated with *Tₜ*, ${x}_{t}^{i}$ may include C sub-data and categories of the C sub-data, that is, ${x}_{t}^{i} = \left({c}_{t , 1}^{i},{c}_{t , 2}^{i},…,{c}_{t , C}^{i}\right)$ (C is an integer greater than or equal to 1), and ${c}_{t , j}^{i}$ includes a j^{th} sub-data and a category of the j^{th} sub-data.

*Tₜ* may be various tasks, and correspondingly, data associated with *Tₜ* is different. For example, when *Tₜ* is a classification task, a piece of data ${x}_{t}^{i}$ associated with the text classification task may be "Content: XXX doughnut selfie, taken from an unexpected angle yet surprisingly good, and beauty attracts all things", and a processing result ${y}_{t}^{i}$ of ${x}_{t}^{i}$ may be "Classification: entertainment news". ${x}_{t}^{i}$ includes one piece of sub-data: "XXX doughnut selfie, taken from an unexpected angle yet surprisingly good, and beauty attracts all things", and a category of the sub-data is "Content".

For another example, when *Tₜ* is a question-answering task, a piece of data ${x}_{t}^{i}$ associated with the question-answering task may be "Article: development history of XX enterprise: XX enterprise is a technology-oriented enterprise founded in ...; Question: in which year was the XX enterprise founded", and a processing result ${y}_{t}^{i}$ of ${x}_{t}^{i}$ may be "Answer: XX enterprise was founded in 1987". ${x}_{t}^{i}$ includes two pieces of sub-data: "development history of XX enterprise: XX enterprise is a technology-oriented enterprise founded in ..." and "in which year was the XX enterprise founded". Categories of the two pieces of sub-data respectively are "Article" and "Question".

(2) After the data associated with the plurality of tasks and the processing result of the data associated with the plurality of tasks are obtained through collection, for any task, a dedicated storage area may be set in the data warehouse, data associated with the task and a processing result of the data associated with the task are stored in the storage area, and the task is used as an index of the storage area.

It should be noted that an operation similar to that performed on the task may also be performed on remaining tasks in the plurality of tasks. As a result, finally, the data associated with the plurality of tasks and the processing result of the data associated with the plurality of tasks may be correspondingly stored in a plurality of storage areas of the data warehouse. In this way, the data warehouse is successfully constructed.

More specifically, the data associated with the target task and the processing result of the data associated with the target task may be obtained from the data warehouse in the following manner:

After the data warehouse is constructed, because the plurality of tasks are respectively used as indexes of the plurality of storage areas of the data warehouse, if the data associated with the target task (which may be understood as a task in the plurality of tasks) and the processing result of the data associated with the target task need to be obtained, a corresponding storage area may be directly found in the data warehouse based on the target task, and the data associated with the target task and the processing result of the data associated with the target task are read from the storage area.

402: Generate first description information of the target task based on the data and the processing result.

After the data associated with the target task and the processing result of the data associated with the target task are obtained, the data associated with the target task and the processing result of the data associated with the target task may be processed, to obtain the first description information of the target task. It should be noted that the first description information of the target task may be understood as a first text used to describe the target task, and the first text does not include any placeholder.

Specifically, the first description information of the target task may be obtained in the following manner:

After the data associated with the target task and the processing result of the data associated with the target task are obtained, the data associated with the target task may be used as an input of the target task, and the processing result of the data associated with the target task is used as an output of the target task. Next, a first instruction may be constructed based on the input and the output of the target task, and the first instruction instructs to generate an initial description for the target task by using the input and the output of the target task as a reference. Then, the first instruction may be input into a first neural network model (which may also be understood as a trained neural network model), to process the first instruction by using the first neural network model, thereby obtaining the first description information of the target task.

Still as shown in the foregoing example, as shown in FIG. 5 (FIG. 5 is a diagram of obtaining task description information according to an embodiment of this application), a template *Tₜ* ( *Tₜ* is set as a classification task) that needs to be obtained is set, and after the data ${x}_{t}^{i}$ associated with *Tₜ* and a processing result ${y}_{t}^{i}$ of ${x}_{t}^{i}$ are read from the data warehouse, ${x}_{t}^{i}$ : "Content: XXX doughnut selfie, taken from an unexpected angle yet surprisingly good, and beauty attracts all things" may be considered as an input of the classification task, and ${y}_{t}^{i}$: "Classification: entertainment news" is considered as an output of the classification task. Next, an instruction may be constructed based on the input and the output of the classification task: "Based on the input and the output of the classification task, generate a description of the classification task that is as rich and detailed as possible, and is fluent and natural, conforming to human writing habits." Then, the instruction may be input into a trained large language model, so that the model outputs an initial description *dₜ* of the classification task: "Select an answer from a plurality of existing options based on given content, so that a type of news to which the content belongs can be determined and identified".

403: Generate a plurality of pieces of second description information of the target task based on the data and the first description information of the target task, where any piece of second description information includes a placeholder for carrying the data.

After the first description information of the target task is obtained, the data associated with the target task and the first description information of the target task may be processed, to obtain the plurality of pieces of second description information (which may also be referred to as a plurality of templates of the target task) of the target task. It should be noted that the plurality of pieces of second description information of the target task may be understood as a plurality of second texts used to describe the target task (the second text and the first text usually express similar content in different express manners), and any one of the plurality of second texts may include the placeholder for carrying the data associated with the target task.

Specifically, the second description information of the target task may be presented in the following manner:
It can be learned from the foregoing content that the data associated with the target task may include at least one piece of sub-data, and at least one data category that is in a one-to-one correspondence with the at least one piece of sub-data. Therefore, correspondingly, in the plurality of pieces of second description information of the target task that are obtained based on the data associated with the target task and the first description information of the target task, any piece of second description information may include at least one placeholder that is in a one-to-one correspondence with the at least one data category. It may be understood that, in the plurality of pieces of second description information of the target task, the at least one placeholder included in any piece of second description information may be used to separately carry the at least one piece of sub-data included in the data associated with the target task.

Still as in the foregoing example, because the sub-data included in *xₜⁱ* is "XXX doughnut selfie, taken from an unexpected angle yet surprisingly good, and beauty attracts all things", the category of the sub-data is "Content", and the initial description *dₜ* of the classification task is "Select an answer from a plurality of existing options based on given content, so that a type of news to which the content belongs can be determined and identified". Therefore, a final description of the classification task may be "Please determine a category to which the article belongs based on the given article [content] and alternative category options 1, 2, and 3", where [content] is a placeholder included in the final description of the classification task, and the placeholder may be used to fill in the sub-data "XXX doughnut selfie, taken from an unexpected angle yet surprisingly good, and beauty attracts all things".

More specifically, the second description information of the target task may be obtained in the following manner:
After the first description information of the target task is obtained, at least one data category included in the data associated with the target task may be used as a keyword of the target task. Next, a second instruction may be constructed based on the first description information of the target task and the keyword of the target task, where the second instruction instructs to insert the keyword of the target task into the initial description of the target task, to generate the final description of the target task. Then, the second instruction may be input into a second neural network model (which may also be understood as a trained neural network model), to process the second instruction by using the second neural network model, thereby obtaining the plurality of pieces of second description information of the target task.

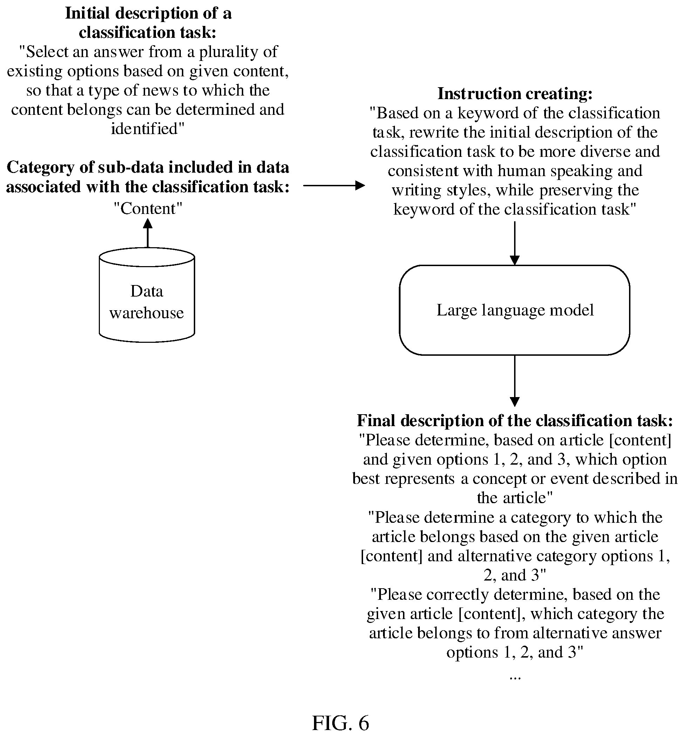

Still as shown in FIG. 6 (FIG. 6 is another diagram of obtaining task description information according to an embodiment of this application), after *dₜ* is obtained, the category "Content" of the sub-data included in ${x}_{t}^{i}$ may be considered as a keyword of the classification task. Next, an instruction may be constructed based on *dₜ* and the keyword of the classification task: "Based on the keyword of the classification task, rewrite the initial description of the classification task to be more diverse and consistent with human speaking and writing styles, while preserving the keyword of the classification task". Then, the instruction may be input into the trained large language model, so that the model outputs a plurality of final descriptions ${D}_{t} = \left({D}_{t}^{1},{D}_{t}^{2},…,{D}_{t}^{K}\right)$ (that is, the plurality of templates of the classification task) of the classification task. The final description ${D}_{t}^{1}$ is "Please determine, based on article [content] and options 1, 2, and 3, which option best represents a concept or event described in the article". The final description ${D}_{t}^{2}$ is "Please determine a category to which the article belongs based on the given article [content] and alternative category options 1, 2, and 3". The final description ${D}_{t}^{3}$ is "Please correctly determine, based on the given article [content], which category the article belongs to from alternative answer options 1, 2, and 3". The final description ${D}_{t}^{4}$ is "Please correctly select a topic most related to the article [content] from the following options 1, 2, and 3", and so on.

404: Select third description information from the plurality of pieces of second description information, where the third description information carrying the data is used for model training, to obtain the model that can complete the target task.

After the plurality of pieces of second description information of the target task are obtained, one or more pieces of second description information may be selected from the plurality of pieces of second description information of the target task as the third description information of the target task. In this case, the data associated with the target task may be inserted into the third description information obtained through selection, to obtain the third description information carrying the data associated with the target task (which may also be understood as a third instruction, and the third instruction instructs to perform target task-based processing on the data associated with the target task). In this way, model training may be completed by using the third description information carrying the data associated with the target task, to obtain the model that can complete the target task.

Specifically, the third description information of the target task may be obtained in the following manner:
(1) After the plurality of pieces of second description information of the target task are obtained, the plurality of pieces of second description information of the target task may be clustered by using a clustering algorithm (for example, a K-means algorithm), to obtain a plurality of information categories. It may be understood that, in the plurality of information categories, any information category may include at least one piece of second description information of the target task.

Generally, the plurality of pieces of second description information that are of the target task and that are output by the second neural network model are usually presented in a form of a text. Therefore, to improve clustering efficiency, before clustering, computation may be first performed on the plurality of pieces of second description information presented in the form of a text, to obtain a plurality of pieces of second description information presented in a form of a vector (embedding). Then, the plurality of pieces of second description information presented in the form of a vector may be clustered, to obtain the plurality of information categories.

Still as in the foregoing example, after the plurality of final descriptions ${D}_{t} = \left({D}_{t}^{1},{D}_{t}^{2},…,{D}_{t}^{K}\right)$ of the classification task are obtained, because ${D}_{t} = \left({D}_{t}^{1},{D}_{t}^{2},…,{D}_{t}^{K}\right)$ is the plurality of final descriptions in a form of a text, the plurality of final descriptions in the form of a text may be first converted into final descriptions ${R}_{t} = \left({R}_{t}^{1},{R}_{t}^{2},…,{R}_{t}^{K}\right)$ in a form of a vector, and clustering is performed on ${R}_{t} = \left({R}_{t}^{1},{R}_{t}^{2},…,{R}_{t}^{K}\right)$ by using the K-means algorithm, to obtain P categories (P is an integer greater than or equal to 2), where each category includes at least one final description in the form of a vector.

(2) After the plurality of information categories are obtained, for any one of the plurality of information categories, optimal second description information may be determined as the third description information of the target task from at least one piece of second description information included in the information category. An operation similar to that performed on the information category may also be performed on remaining information categories in the plurality of information categories. As a result, a plurality of pieces of third description information of the target task may be finally obtained.

More specifically, the plurality of pieces of third description information of the target task may be obtained from the plurality of information categories in the following manner:
(1) After the plurality of pieces of second description information of the target task are obtained, the data associated with the target task may be inserted into the plurality of pieces of second description information, to obtain the plurality of pieces of second description information carrying the data associated with the target task (which may also be understood as a plurality of fourth instructions, and the plurality of fourth instructions are all instruct to perform target task-based processing on the data associated with the target task). Any piece of second description information carrying the data associated with the target task may be input into a third neural network model (a trained neural network model), to process, by using the third neural network model, the second description information carrying the data associated with the target task, thereby obtaining, through prediction, a probability of the processing result of the data associated with the target task.

It should be noted that a similar operation may also be performed on remaining second description information carrying the data associated with the target task. As a result, a plurality of probabilities of the processing result of the data associated with the target task may be finally obtained. Because the plurality of probabilities are in a one-to-one correspondence with the plurality of second description information carrying the data associated with the target task, the plurality of probabilities may be used as evaluation values of the plurality of second description information of the target task.

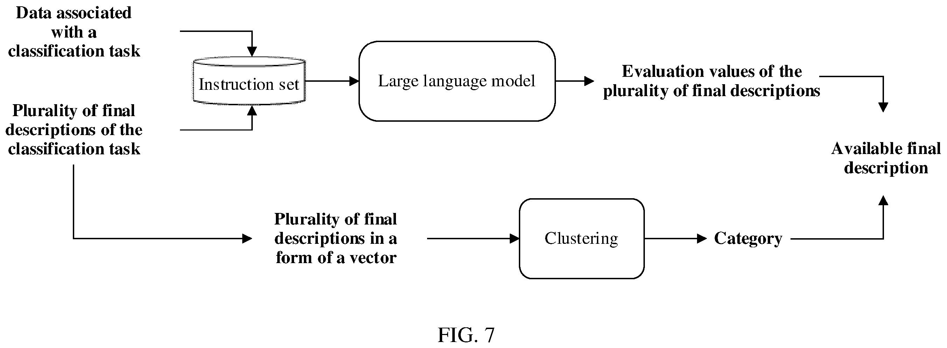

Still as shown in the foregoing example, as shown in FIG. 7 (FIG. 7 is a diagram of selecting task description information according to an embodiment of this application), after ${D}_{t} = \left({D}_{t}^{1},{D}_{t}^{2},…,{D}_{t}^{K}\right)$ is obtained, ${x}_{t}^{i}$ may be filled in ${D}_{t} = \left({D}_{t}^{1},{D}_{t}^{2},…,{D}_{t}^{K}\right)$ to obtain an instruction set ${I}_{t} = \left({I}_{t}^{1},{I}_{t}^{2},…,{I}_{t}^{K}\right)$, and any instruction ${I}_{t}^{u}$ (u=1, ..., K) in the instruction set may be input into the large language model, to obtain a probability $g \left({I}_{t}^{u}, {y}_{t}^{i}\right)$ of ${y}_{t}^{i}$ through prediction, and $g \left({I}_{t}^{u}, {y}_{t}^{i}\right)$ may be directly used as the evaluation value of a final description ${D}_{t}^{u}$. In this way, all evaluation values ${G}_{t} = \left(g\left({D}_{t}^{1}, {y}_{t}^{i}\right),g\left({D}_{t}^{2}, {y}_{t}^{i}\right),…,g\left({D}_{t}^{K}, {y}_{t}^{i}\right)\right)$ of ${D}_{t} = \left({D}_{t}^{1},{D}_{t}^{2},…,{D}_{t}^{K}\right)$ may be finally obtained.

(2) After the plurality of information categories are obtained, for any one of the plurality of information categories, second description information with a highest evaluation value may be used as the third description information of the target task from at least one piece of second description information included in the information category. An operation similar to that performed on the information category may also be performed on remaining information categories in the plurality of information categories. As a result, a plurality of pieces of third description information of the target task may be finally obtained.

Still as in the foregoing example, after P categories are obtained, a final description with a highest evaluation value in any category may be determined as an available final description. As a result, P available final descriptions of the classification task *Tₜ*, that is, the P available templates of *Tₜ*, may be finally obtained.

It should be understood that, in this embodiment, in the examples shown in FIG. 5 to FIG. 7, reading a piece of data ${x}_{t}^{i}$ associated with *Tₜ* from the data warehouse is merely described as an example, and does not constitute a limitation on a quantity of read data. During actual application, several pieces of data ${x}_{t}^{i - 1} , {x}_{t}^{i} , {x}_{t}^{i + 1}$ and the like associated with *Tₜ* may also be read from the data warehouse. In a subsequent process, a processing process of a plurality of pieces of data is similar to a processing process of a single piece of data, and details are not described herein again.

It should be further understood that, in this embodiment, the first neural network model, the second neural network model, and the third neural network model may be a same model. Certainly, the first neural network model, the second neural network model, and the third neural network model may alternatively be different models. For example, in the examples shown in FIG. 5 to FIG. 7, the three models are a same large language model.

It should be further understood that, after the third description information of the target task is selected, the third description information carrying the target task may be used for model training. An object of the model training is a fourth neural network model (a to-be-trained neural network model), and a result obtained through the model training is a fifth neural network model (which is a trained neural network model from the fourth neural network model, that is, a model that can complete the target task). The fifth neural network model and the first neural network model are usually different models. Similarly, the fifth neural network model and the second neural network model are usually different models, and the fifth neural network model and the third neural network model are usually different models.

In this embodiment of this application, when the model that can complete the target task needs to be trained, the data associated with the target task and the processing result obtained by processing the data based on the target task may be first obtained. Next, the first description information of the target task may be generated based on the data associated with the target task and the processing result of the data. Then, the plurality of pieces of second description information of the target task may be generated based on the data associated with the target task and the first description information of the target task, where any piece of second description information includes the placeholder for carrying the data associated with the target task. Finally, the third description information of the target task may be selected from the plurality of pieces of second description information of the target task. As a result, the third description information carrying the data associated with the target task may be used as training data, to complete model training, thereby obtaining the model that can complete the target task. It can be learned from the foregoing process that this embodiment of this application provides a framework for automatically generating description information of a task. The framework may generate a plurality of pieces of description information (that is, the plurality of pieces of second description information of the target task) of the task based on data associated with the task and a processing result of the data, and select optimal description information (that is, the third description information of the target task) of the task from the plurality of pieces of description information of the task as training data, to complete model training. Because a running process of the framework involves minimal manual intervention, labor costs can be reduced, thereby reducing model training costs.

Further, according to the framework for automatically generating the description information of the task provided in this embodiment of this application, in the running process of the framework, the description information of the task may be generated by using a neural network model, and the description information of the task may be selected through processing (clustering and evaluation) in two phases. In this way, various factors may be comprehensively considered, so that the finally selected description information has accuracy and diversity, thereby improving model training effect.

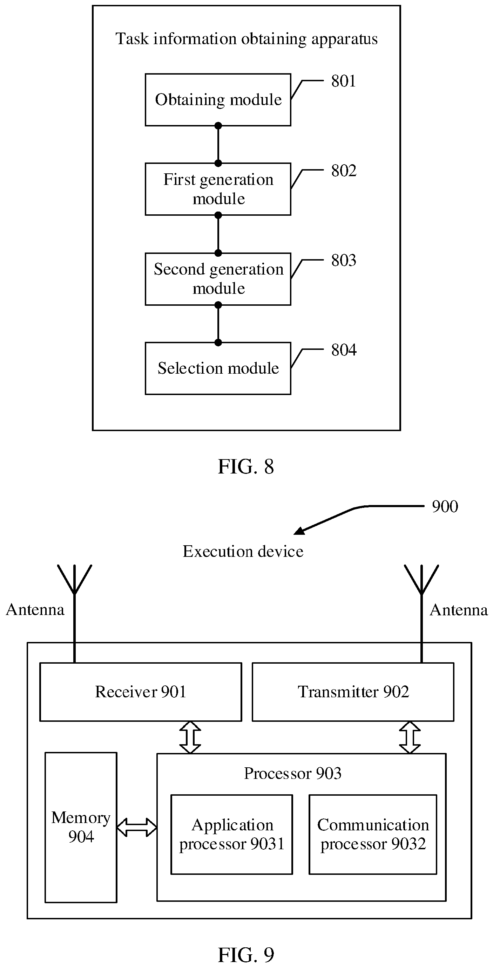

The foregoing describes in detail the task information obtaining method provided in embodiments of this application. The following describes a task information obtaining apparatus provided in an embodiment of this application. FIG. 8 is a diagram of a structure of a task information obtaining apparatus according to an embodiment of this application. As shown in FIG. 8, the apparatus includes the following modules.

An obtaining module 801 is configured to obtain data associated with a target task, and a processing result obtained by processing the data based on the target task.

A first generation module 802 is configured to generate first description information of the target task based on the data and the processing result.

A second generation module 803 is configured to generate a plurality of pieces of second description information of the target task based on the data and the first description information of the target task, where any piece of second description information includes a placeholder for carrying the data.

A selection module 804 is configured to select third description information from the plurality of pieces of second description information, where the third description information carrying the data is used for model training, to obtain a model that can complete the target task.

In this embodiment of this application, when the model that can complete the target task needs to be trained, the data associated with the target task and the processing result obtained by processing the data based on the target task may be first obtained. Next, the first description information of the target task may be generated based on the data associated with the target task and the processing result of the data. Then, the plurality of pieces of second description information of the target task may be generated based on the data associated with the target task and the first description information of the target task, where any piece of second description information includes the placeholder for carrying the data associated with the target task. Finally, the third description information of the target task may be selected from the plurality of pieces of second description information of the target task. As a result, the third description information carrying the data associated with the target task may be used as training data, to complete model training, thereby obtaining the model that can complete the target task. It can be learned from the foregoing process that this embodiment of this application provides a framework for automatically generating description information of a task. The framework may generate a plurality of pieces of description information (that is, the plurality of pieces of second description information of the target task) of the task based on data associated with the task and a processing result of the data, and select optimal description information (that is, the third description information of the target task) of the task from the plurality of pieces of description information of the task as training data, to complete model training. Because a running process of the framework involves minimal manual intervention, labor costs can be reduced, thereby reducing model training costs.

In a possible implementation, the data includes at least one piece of sub-data and at least one data category corresponding to the at least one piece of sub-data, any piece of second description information includes at least one placeholder corresponding to the at least one data category, and the at least one placeholder is used to carry the at least one piece of sub-data.

In a possible implementation, the first generation module 802 is configured to process the data and the processing result by using a first neural network model, to obtain the first description information of the target task.

In a possible implementation, the second generation module 803 is configured to process the data and the first description information of the target task by using a second neural network model, to obtain the plurality of pieces of second description information of the target task.

In a possible implementation, the selection module 804 is configured to: cluster the plurality of pieces of second description information to obtain a plurality of information categories, where one of the plurality of information categories includes at least one piece of second description information; and select a plurality of pieces of third description information from the plurality of information categories.

In a possible implementation, the plurality of pieces of second description information are presented in a form of a text. The selection module 804 is configured to: convert the plurality of pieces of second description information presented in the form of a text into a plurality of pieces of second description information presented in a form of a vector; and cluster the plurality of pieces of second description information presented in the form of a vector, to obtain the plurality of information categories.

In a possible implementation, the apparatus further includes: a processing module, configured to separately process, by using a third neural network model, the plurality of pieces of second description information carrying the data, to obtain a plurality of probabilities of the processing result; and an evaluation module, configured to use the plurality of probabilities as evaluation values of the plurality of pieces of second description information. The selection module 804 is configured to use, in any one of the plurality of information categories, second description information with a highest evaluation value as the third description information.

In a possible implementation, an object of model training is a fourth neural network model, and the model that can complete the target task is a fifth neural network model.

It should be noted that, content such as information exchange between the modules/units of the apparatus and an execution process is based on the same concept as the method embodiments of this application, and produces the same technical effects as the method embodiments of this application. For specific content, refer to the foregoing descriptions in the method embodiments in embodiments of this application. Details are not described herein again.

An embodiment of this application further relates to an execution device. FIG. 9 is a diagram of a structure of an execution device according to an embodiment of this application. As shown in FIG. 9, the execution device 900 may be specifically a mobile phone, a tablet computer, a notebook computer, an intelligent wearable device, a server, or the like. This is not limited herein. The task information obtaining apparatus described in the embodiment corresponding to FIG. 8 may be deployed on the execution device 900, and is configured to implement the task information obtaining function in the embodiment corresponding to FIG. 4. Specifically, the execution device 900 includes a receiver 901, a transmitter 902, a processor 903 (there may be one or more processors 903 in the execution device 900, and one processor is used as an example in FIG. 9), and a memory 904. The processor 903 may include an application processor 9031 and a communication processor 9032. In some embodiments of this application, the receiver 901, the transmitter 902, the processor 903, and the memory 904 may be connected through a bus or in another manner.

The memory 904 may include a read-only memory and a random access memory, and provide instructions and data for the processor 903. A part of the memory 904 may further include a non-volatile random access memory (non-volatile random access memory, NVRAM). The memory 904 stores processor and operation instructions, an executable module, or a data structure, or a subset thereof, or an extended set thereof. The operation instructions may include various operation instructions for implementing various operations.

The processor 903 controls an operation of the execution device. During specific application, the components of the execution device are coupled together through a bus system. In addition to a data bus, the bus system may further include a power bus, a control bus, a status signal bus, and the like. However, for clear description, various types of buses in the figure are marked as the bus system.

The methods disclosed in the foregoing embodiments of this application may be applied to the processor 903, or may be implemented by the processor 903. The processor 903 may be an integrated circuit chip and has a signal processing capability. In an implementation process, the steps in the foregoing methods may be implemented by using a hardware integrated logic circuit in the processor 903 or by using instructions in a form of software. The processor 903 may be a general-purpose processor, a digital signal processor (digital signal processor, DSP), a microprocessor, or a microcontroller. The processor 903 may further include an application-specific integrated circuit (application-specific integrated circuit, ASIC), a field-programmable gate array (field-programmable gate array, FPGA) or another programmable logic device, a discrete gate or transistor logic device, or a discrete hardware component. The processor 903 may implement or perform the methods, steps, and logic block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory 904, and the processor 903 reads information in the memory 904, and completes the steps in the foregoing methods in combination with hardware of the processor 903.

The receiver 901 may be configured to receive input digit or character information, and generate a signal input related to a related setting and function control of the execution device. The transmitter 902 may be configured to output digit or character information through a first interface. The transmitter 902 may be further configured to send instructions to a disk group through the first interface, to modify data in the disk group. The transmitter 902 may further include a display device, for example, a display.

In this embodiment of this application, in a case, the processor 903 is configured to obtain optimal description information (that is, the foregoing third description information) of a target task by using the first neural network model, the second neural network model, and the third neural network model in the embodiment corresponding to FIG. 4.

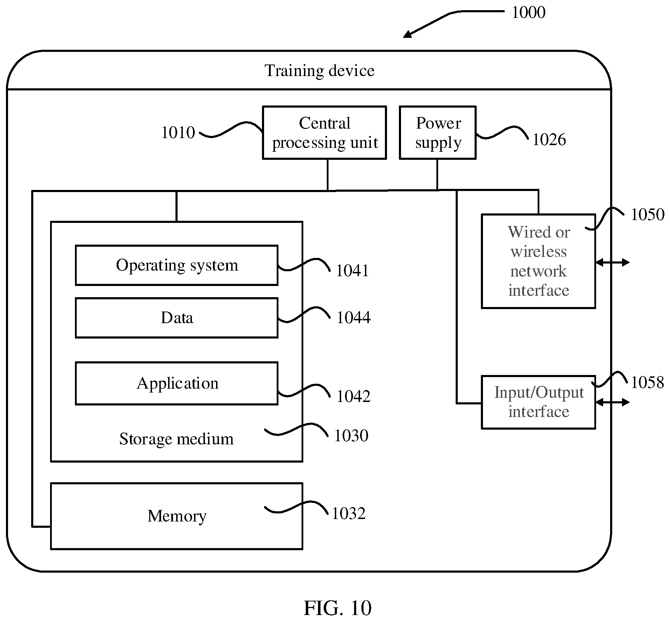

An embodiment of this application further relates to a training device. FIG. 10 is a diagram of a structure of a training device according to an embodiment of this application. As shown in FIG. 10, the training device 1000 is implemented by one or more servers. The training device 1000 may vary greatly due to different configurations or performance, and may include one or more central processing units (central processing units, CPUs) 1010 (for example, one or more processors), a memory 1032, and one or more storage media 1030 (for example, one or more mass storage devices) for storing an application 1042 or data 1044. The memory 1032 and the storage medium 1030 may perform transient storage or persistent storage. A program stored in the storage medium 1030 may include one or more modules (not shown in the figure), and each module may include a series of instruction operations for the training device. Further, the central processing unit 1010 may be configured to communicate with the storage medium 1030, and perform, on the training device 1000, the series of instruction operations in the storage medium 1030.

The training device 1000 may further include one or more power supplies 1026, one or more wired or wireless network interfaces 1050, one or more input/output interfaces 1058, or one or more operating systems 1041, for example, Windows Server^{™}, Mac OS X^{™}, Unix^{™}, Linux^{™}, or FreeBSD^{™}.

Specifically, the training device may receive optimal description information of a target task that is sent by the execution device shown in FIG. 9, and use the optimal description information of the target task as training data, to train a fourth neural network model by using the training data, thereby obtaining a fifth neural network model that can complete the target task.

An embodiment of this application further relates to a computer storage medium. The computer-readable storage medium stores a program used for signal processing. When the program is run on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or a terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

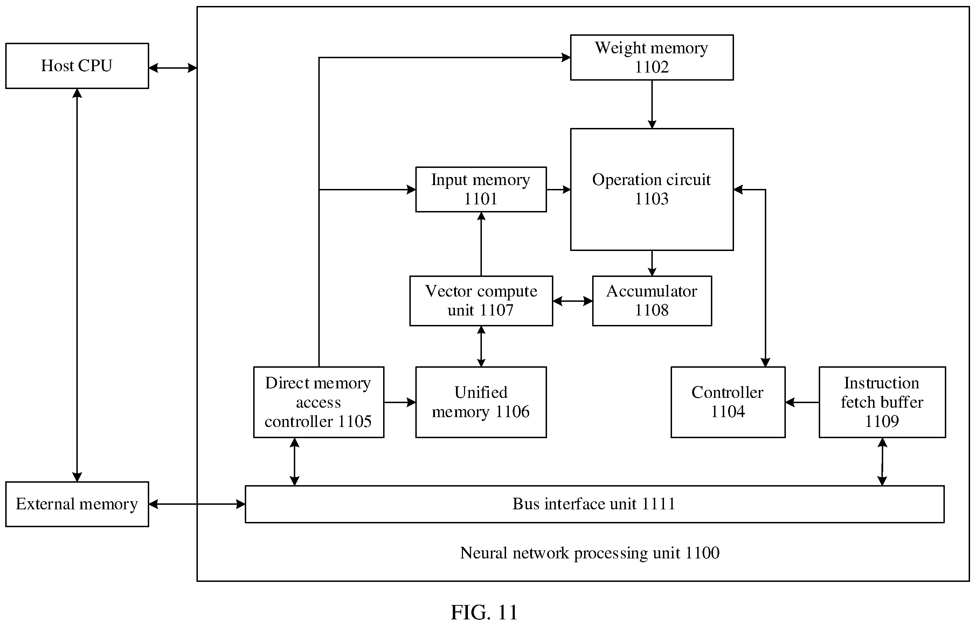

Specifically, FIG. 11 is a diagram of a structure of a chip according to an embodiment of this application. The chip may be represented by a neural network processing unit NPU 1100. The NPU 1100 is mounted to a host CPU (Host CPU) as a coprocessor, and the host CPU assigns a task. A core part of the NPU is an operation circuit 1103. A controller 1104 controls the operation circuit 1103 to extract matrix data in a memory and perform a multiplication operation.

In some implementations, the operation circuit 1103 includes a plurality of process engines (Process Engines, PEs). In some implementations, the operation circuit 1103 is a two-dimensional systolic array. The operation circuit 1103 may alternatively be a one-dimensional systolic array or another electronic circuit capable of performing mathematical operations such as multiplication and addition. In some implementations, the operation circuit 1103 is a general-purpose matrix processor.

For example, it is assumed that there is an input matrix A, a weight matrix B, and an output matrix C. The operation circuit fetches, from a weight memory 1102, data corresponding to the matrix B, and caches the data on each PE in the operation circuit. The operation circuit fetches data of the matrix A from an input memory 1101, to perform a matrix operation on the matrix B, and stores an obtained partial result or an obtained final result of the matrix in an accumulator (accumulator) 1108.

A unified memory 1106 is configured to store input data and output data. Weight data is directly transferred to the weight memory 1102 through a direct memory access controller (Direct Memory Access Controller, DMAC) 1105. The input data is also transferred to the unified memory 1106 through the DMAC.

A BIU is a bus interface unit, namely, a bus interface unit 1111, and is used for interaction between an AXI bus, and the DMAC and an instruction fetch buffer (Instruction Fetch Buffer, IFB) 1109.

The bus interface unit (Bus Interface Unit, BIU for short) 1111 is used by the instruction fetch buffer 1109 to obtain instructions from an external memory, and is further used by the direct memory access controller 1105 to obtain raw data of the input matrix A or the weight matrix B from the external memory.

The DMAC is mainly configured to transfer input data in the external memory DDR to the unified memory 1106, transfer weight data to the weight memory 1102, or transfer input data to the input memory 1101.

A vector compute unit 1107 includes a plurality of operation processing units, and if needed, performs further processing, for example, vector multiplication, vector addition, an exponential operation, a logarithm operation, or magnitude comparison, on an output of the operation circuit 1103. The vector compute unit is mainly used for network computation at a non-convolutional/fully connected layer in a neural network, such as batch normalization (batch normalization), pixel-level summation, or upsampling of a predicted label plane.

In some implementations, the vector compute unit 1107 can store a processed output vector into the unified memory 1106. For example, the vector compute unit 1107 may apply a linear function or a nonlinear function to the output of the operation circuit 1103, for example, perform linear interpolation on a prediction label plane extracted at a convolutional layer. For another example, the vector compute unit 1107 may apply a linear function or a nonlinear function to a vector of an accumulated value, to generate an activation value. In some implementations, the vector compute unit 1107 generates a normalized value, a pixel-level summation value, or both. In some implementations, the processed output vector can be used as an activated input to the operation circuit 1103, for example, the processed output vector can be used at a subsequent layer of the neural network.

The instruction fetch buffer (instruction fetch buffer) 1109 connected to the controller 1104 is configured to store instructions used by the controller 1104.

The unified memory 1106, the input memory 1101, the weight memory 1102, and the instruction fetch buffer 1109 are all on-chip memories. The external memory is private for a hardware architecture of the NPU.

Any one of the processors mentioned above may be a general-purpose central processing unit, a microprocessor, an ASIC, or one or more integrated circuits for controlling execution of the foregoing programs.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected based on actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, in this application, an implementation by using a software program is a better implementation in most cases. Based on such an understanding, the technical solutions of this application essentially or the part contributing to the prior art may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement the embodiments, all or some of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, such as a training device or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (Solid State Disk, SSD)), or the like.

## Claims

1. A task information obtaining method, wherein the method comprises:
obtaining data associated with a target task, and a processing result obtained by processing the data based on the target task;
generating first description information of the target task based on the data and the processing result;
generating a plurality of pieces of second description information of the target task based on the data and the first description information of the target task, wherein any piece of second description information comprises a placeholder for carrying the data; and
selecting third description information from the plurality of pieces of second description information, wherein the third description information carrying the data is used for model training, to obtain a model that can complete the target task.

2. The method according to claim 1, wherein the data comprises at least one piece of sub-data and at least one data category corresponding to the at least one piece of sub-data, the any piece of second description information comprises at least one placeholder corresponding to the at least one data category, and the at least one placeholder is used to carry the at least one piece of sub-data.

3. The method according to claim 1 or 2, wherein generating the first description information of the target task based on the data and the processing result comprises:
processing the data and the processing result by using a first neural network model, to obtain the first description information of the target task.

4. The method according to any one of claims 1 to 3, wherein generating the plurality of pieces of second description information of the target task based on the data and the first description information of the target task comprises:
processing the data and the first description information of the target task by using a second neural network model, to obtain the plurality of pieces of second description information of the target task.

5. The method according to any one of claims 1 to 4, wherein there are a plurality of pieces of third description information, and selecting the third description information from the plurality of pieces of second description information comprises:
clustering the plurality of pieces of second description information to obtain a plurality of information categories, wherein one of the plurality of information categories comprises at least one piece of second description information; and
selecting the plurality of pieces of third description information from the plurality of information categories.

6. The method according to claim 5, wherein the plurality of pieces of second description information are presented in a form of a text, and clustering the plurality of pieces of second description information to obtain the plurality of information categories comprises:
converting the plurality of pieces of second description information presented in the form of a text into a plurality of pieces of second description information presented in a form of a vector; and
clustering the plurality of pieces of second description information presented in the form of a vector, to obtain the plurality of information categories.

7. The method according to claim 5 or 6, wherein the method further comprises:
separately processing, by using a third neural network model, the plurality of pieces of second description information carrying the data, to obtain a plurality of probabilities of the processing result; and
using the plurality of probabilities as evaluation values of the plurality of pieces of second description information; and
selecting the plurality of pieces of third description information from the plurality of categories comprises:
using, in any one of the plurality of information categories, second description information with a highest evaluation value as the third description information.

8. The method according to any one of claims 1 to 7, wherein an object of the model training is a fourth neural network model, and the model that can complete the target task is a fifth neural network model.

9. A task information obtaining apparatus, wherein the apparatus comprises:
an obtaining module, configured to obtain data associated with a target task, and a processing result obtained by processing the data based on the target task;
a first generation module, configured to generate first description information of the target task based on the data and the processing result;
a second generation module, configured to generate a plurality of pieces of second description information of the target task based on the data and the first description information of the target task, wherein any piece of second description information comprises a placeholder for carrying the data; and
a selection module, configured to select third description information from the plurality of pieces of second description information, wherein the third description information carrying the data is used for model training, to obtain a model that can complete the target task.

10. The apparatus according to claim 9, wherein the data comprises at least one piece of sub-data and at least one data category corresponding to the at least one piece of sub-data, the any piece of second description information comprises at least one placeholder corresponding to the at least one data category, and the at least one placeholder is used to carry the at least one piece of sub-data.

11. The apparatus according to claim 9 or 10, wherein the first generation module is configured to process the data and the processing result by using a first neural network model, to obtain the first description information of the target task.

12. The apparatus according to any one of claims 9 to 11, wherein the second generation module is configured to process the data and the first description information of the target task by using a second neural network model, to obtain the plurality of pieces of second description information of the target task.

13. The apparatus according to any one of claims 9 to 12, wherein the selection module is configured to:
cluster the plurality of pieces of second description information to obtain a plurality of information categories, wherein one of the plurality of information categories comprises at least one piece of second description information; and
select the plurality of pieces of third description information from the plurality of information categories.

14. The apparatus according to claim 13, wherein the plurality of pieces of second description information are presented in a form of a text, and the selection module is configured to:
convert the plurality of pieces of second description information presented in the form of a text into a plurality of pieces of second description information presented in a form of a vector; and
cluster the plurality of pieces of second description information presented in the form of a vector, to obtain the plurality of information categories.

15. The apparatus according to claim 13 or 14, wherein the apparatus further comprises:
a processing module, configured to separately process, by using a third neural network model, the plurality of pieces of second description information carrying the data, to obtain a plurality of probabilities of the processing result; and
an evaluation module, configured to use the plurality of probabilities as evaluation values of the plurality of pieces of second description information; and
the selection module is configured to use, in any one of the plurality of information categories, second description information with a highest evaluation value as the third description information.

16. The apparatus according to any one of claims 9 to 15, wherein an object of the model training is a fourth neural network model, and the model that can complete the target task is a fifth neural network model.

17. A task information obtaining apparatus, wherein the apparatus comprises a memory and a processor, the memory stores code, the processor is configured to execute the code, and when the code is executed, the task information obtaining apparatus performs the method according to any one of claims 1 to 8.

18. A computer storage medium, wherein the computer storage medium stores one or more instructions, and when the instructions are executed by one or more computers, the one or more computers are enabled to perform the method according to any one of claims 1 to 8.

19. A computer program product, wherein the computer program product stores instructions, and when the instructions are executed by a computer, the computer is enabled to perform the method according to any one of claims 1 to 8.
